# EUROPÄISCHE PATENTSCHRIFT

(11) **EP 1 166 619 B1**
(45) Veröffentlichungstag und Bekanntmachung des Hinweises auf die Patenterteilung: **05.03.2008**
(21) Anmeldenummer: 01114432.6
(22) Anmeldetag: 15.06.2001
(51) Int. Cl.: A01F 29/20, A01D 43/08

(54) **Vorrichtung zum Einstellen des Abstandes und/oder der Anpresskraft zweier Walzen einer Nachzerkleinerungseinrichtung**
Device for regulating the distance and/or pressing force between the rollers of a post-chopping device
Dispositif pour la régulation de la distance et/ou la force de compression entre les rouleaux d'un dispositif après broyage

(30) Priorität: 21.06.2000 DE 10030505
(43) Veröffentlichungstag der Anmeldung: 02.01.2002
(73) Patentinhaber: DEERE & COMPANY, Moline, Illinois 61265-8098 (US)
(72) Erfinder: Holtkotte, Eberhard, 66482 Zweibrücken (DE)
(74) Vertreter: Holst, Sönke

(56) Entgegenhaltungen:
- EP-A- 0 835 603
- DE-A- 19 539 143
- FR-A- 2 559 996
- US-A- 4 527 241
- US-A- 5 060 459
- US-A- 5 630 313
- US-A- 6 050 070

## Beschreibung

Die Erfindung betrifft eine Vorrichtung zur Einstellung des Abstandes und/oder der Anpresskraft zweier Walzen einer Nachzerkleinerungseinrichtung, zwischen denen gehäckseltes Erntegut hindurchführbar ist, bei der ein Sensor einen Parameter des Ernteguts erfasst und die Größe des Abstands und/oder die Anpresskraft der Walzen in Abhängigkeit von dem gemessenen Parameter selbsttätig durch eine mit dem Sensor verbundene Steuereinrichtung regelbar ist, welche bei einer Regelung des Abstands zwischen den Walzen mit einer Information über den jeweils aktuellen Abstand beaufschlagbar ist.

Im Stand der Technik können die Walzen von Nachzerkleinerungseinrichtungen mechanisch in einem definierten Abstand positioniert werden. Bei Eintreten eines Fremdkörpers kann eine Walze (oder können beide Walzen) gegen die Kraft einer Feder um einen bestimmten Weg ausweichen. Dabei stellt sich das Problem der Einstellung des Abstandes zwischen den Walzen der Nachzerkleinerungseinrichtung. Wird der Abstand klein gewählt, ist zwar ein sicheres Anschlagen im Erntegut enthaltener Körner gewährleistet, jedoch wird (im Verhältnis zu in größerem Abstand angeordneten Walzen) die Förderrate vermindert und der Energiebedarf zum Antrieb der Nachzerkleinerungseinrichtung vergrößert. Durch Vergrößern des Abstands vermeidet man diese Nachteile, jedoch werden bei feuchtem Erntegut die Körner wegen ihrer gegenüber trockenem Erntegut größeren Elastizität nicht hinreichend sicher angeschlagen. Dann können mit dem Erntegut gefütterte Tiere es nicht vollständig verdauen.

In der DE 195 39 143 A wird eine Einzugsvorrichtung für Feldhäcksler beschrieben, die mit einer Einrichtung zur Regelung des auf eine höhenbewegliche Einzugswalze ausgeübten Drucks versehen ist. Der auf das zwischen den Einzugswalzen transportierte Erntegut wirkende Druck ist somit einstellbar. Der Druck kann auch in Abhängigkeit vom Erntegut gesteuert werden.

Die US 5 630 313 A und die als gattungsbildend angesehene EP 0 835 603 A beschreiben jeweils Aufbereitungseinheiten für landwirtschaftliche Mähmaschinen, die zwei Konditionierwalzen aufweisen. Der Abstand zwischen den Konditionierwalzen wird durch einen Aktor selbsttätig abhängig vom jeweiligen Erntegutdurchsatz geregelt.

Die nachveröffentlichte EP 1 151 658 A beschreibt einen Feldhäcksler, bei dem die Erntegutfeuchte durch einen Leitfähigkeitssensor erfasst wird, dessen Ausgangssignal zur selbsttätigen Einstellung des Abstands zweier Körnerprozessorwalzen dient. Eine Berücksichtigung der jeweiligen Position der Körnerprozessorwalzen wird nicht offenbart.

Das der Erfindung zugrunde liegende Problem wird darin gesehen, ein sicheres Anschlagen im Erntegut enthaltener Körner zu erzielen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, durch einen entsprechenden Sensor die Feuchtigkeit des Ernteguts zu messen. Der Messwert des Sensors dient zu einer selbsttätigen Einstellung des Abstands der Walzen der Nachzerkleinerungseinrichtung und/oder der Anpresskraft, mit der eine Walze auf die andere Walze drückt. Die Größe des Abstands zwischen den Walzen bzw. die Anpresskraft wird durch eine geeignete Steuereinrichtung geregelt. Sie wird bei einer Regelung des Abstands mit einer Information über den jeweils aktuellen Abstand beaufschlagt.

Auf diese Weise erreicht man, dass unabhängig von den Eigenschaften des Ernteguts ein sicheres Anschlagen der im Erntegut enthaltenen Körner erzielt wird. Dadurch wird eine optimale Ausnutzung des Nährwerts des Ernteguts beim Verfüttern an Tiere erzielt. Zusätzlich zur Feuchtigkeit kann beispielsweise der Gehalt des Gutes an Körnern gemessen werden, was anhand des Nährstoffgehalts festgestellt werden kann, der mittels eines entsprechenden Sensors erfassbar ist (s. US 5 991 025 A). Auch kann der Körneranteil optisch gemessen werden.

Als Feuchtigkeitssensor kommt insbesondere ein Mikrowellensensor, ein kapazitiver Sensor oder ein Leitwertsensor in Frage. Allerdings können auch beliebige andere zur Feuchtigkeitsmessung geeigneten Typen von Sensoren Verwendung finden.

Ist das Erntegut relativ feucht, sind die in ihm enthaltenen Körner elastischer als bei trockenem Erntegut. Aus diesem Grund lassen sie sich von der Nachzerkleinerungseinrichtung schwerer anschlagen. Vorzugsweise wird daher von der erfindungsgemäßen Vorrichtung der Abstand zwischen den Walzen bei trockenem Erntegut größer eingestellt als bei feuchtem Erntegut. Man erreicht bei trockenem Erntegut bei geringem Energiebedarf für den Antrieb der Walzen eine hohe Förderrate. Sowohl bei feuchtem als auch bei trockenem Erntegut ergibt sich ein sicheres Anschlagen der Körner. Analog wird die Anpresskraft bei feuchtem Gut größer als bei trockenem Gut gewählt.

Der Abstand zwischen den Walzen kann durch einen einfach oder doppelt wirkenden Hydraulikzylinder eingestellt werden, der durch ein von der Steuereinrichtung betätigtes Ventil mit unter Druck stehender Hydraulikflüssigkeit beaufschlagt wird. Die Verstellung der Walzen kann auch mit einem Elektromotor und/oder pneumatisch oder auf eine beliebige andere Weise erfolgen.

In den Zeichnungen ist ein nachfolgend näher beschriebenes Ausführungsbeispiel der Erfindung dargestellt, bei dem die Walzen der Nachzerkleinerungseinrichtung hydraulisch verstellt werden. Es zeigt:
- Fig. 1: eine Erntemaschine in Seitenansicht und in schematischer Darstellung; und
- Fig. 2: die Nachzerkleinerungseinrichtung mit der zur Regelung des Abstandes der Walzen dienenden Steuereinrichtung.

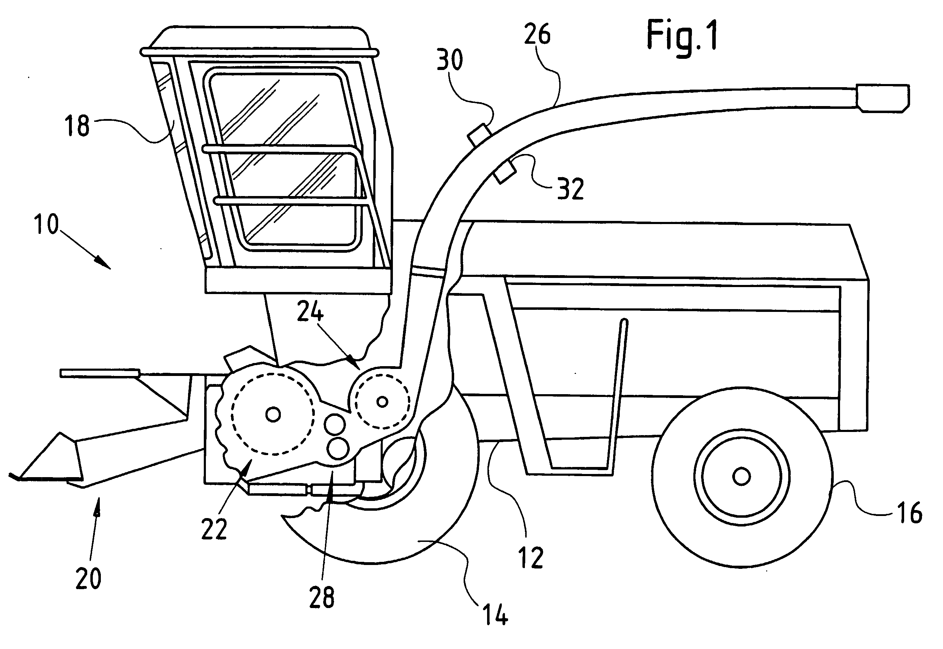

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen, wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26.

Zwischen der Häckseltrommel 22 und der Fördervorrichtung 24 ist eine Nachzerkleinerungsvorrichtung mit zwei zusammenwirkenden Walzen 28 angeordnet, durch die das geförderte Gut der Fördervorrichtung 24 tangential zugeführt wird. Die Walzen 28 der Nachzerkleinerungseinrichtung werden gegensinnig rotativ angetrieben. Zwischen ihnen wird der Strom des gehäckselten Gutes hindurchgeführt. Die Aufgabe der Walzen 28 besteht darin, Körner (insbesondere Maiskörner) des Ernteguts anzuschlagen, damit diese von Tieren, die mit dem Häckselgut gefüttert werden, verdaut werden können. Die Oberflächen der Walzen der auch als Körnerprozessor bezeichneten Nachzerkleinerungseinrichtung können in an sich bekannter Weise aufgeraut, glatt oder profiliert sein.

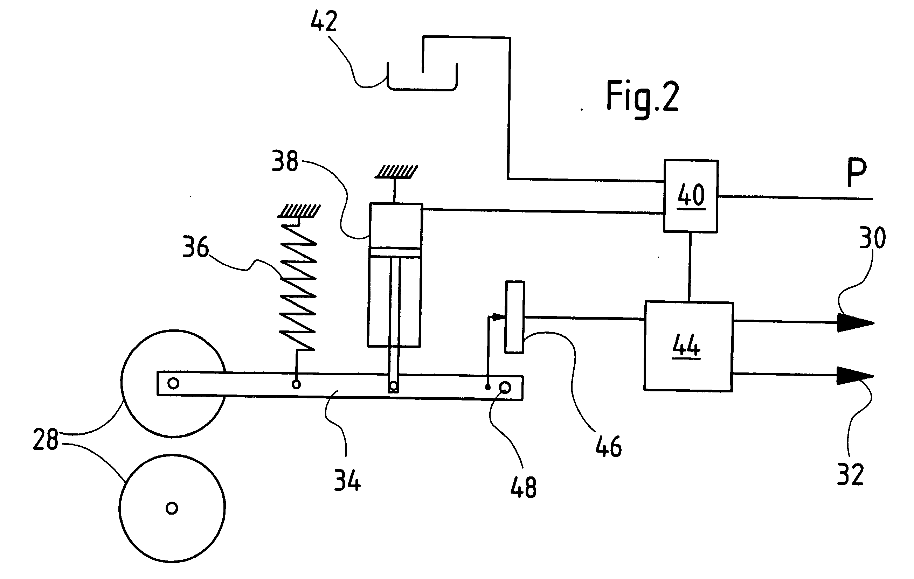

Der Abstand der Walzen 28 der Nachzerkleinerungseinrichtung wird durch eine Steuereinrichtung 44 (Figur 2) in Abhängigkeit von der Feuchtigkeit des geförderten Gutes gesteuert. Der zugrundeliegende Gedanke ist, dass im Gut enthaltene Körner um so schwerer angeschlagen werden, je feuchter das Gut ist, da die Körner dann elastischer sind. Bei trockenem Gut wird somit durch die Steuereinrichtung 44 ein größerer Abstand zwischen den Walzen 28 eingestellt als bei feuchtem Gut. Auf diese Weise vermeidet man bei trockenem Gut den mit einem relativ kleinen Spalt verbundenen, vergrößerten Energiebedarf für den Antrieb der Nachzerkleinerungseinrichtung, welcher größer als bei einem großen Spalt ist, bzw. eine manuelle Verstellung des Abstands zwischen den Walzen 28.

Die Feuchtigkeit des Guts wird durch einen Feuchtigkeitssensor gemessen, der im dargestellten Beispiel aus einem Mikrowellensender 32 und einem Mikrowellenempfänger 30 aufgebaut ist. Der Feuchtigkeitssensor arbeitet in Transmission, d. h. das Gut wird durchstrahlt, und ist im Austragsschacht 26 angeordnet. Nähere Einzelheiten des Aufbaus und der Funktion eines derartigen Feuchtigkeitssensors sind in der DE 196 48 126 A offenbart, deren Lehre durch Verweis in die vorliegende Offenbarung mit aufgenommen wird.

Der Feuchtigkeitssensor ist durch Leitungen mit der Steuereinrichtung 44 verbunden. Die Steuereinheit 44 steuert (elektromagnetisch) ein Ventil 40, das durch Hydraulikleitungen mit einer Quelle P unter Druck stehender Hydraulikflüssigkeit, einem Sumpf 42 und einem Hydraulikzylinder 38 verbunden ist. Der Kolben des Hydraulikzylinders 38 ist mechanisch mit einer Schwinge 34 verbunden, während sich sein Gehäuse am Rahmen 12 der Erntemaschine 10 abstützt. Die Schwinge 34 ist an einem ersten Ende um eine Drehachse 48 drehbar am Rahmen 12 der Erntemaschine 10 gelagert. Am zweiten Ende der Schwinge 34 ist die obere der Walzen 28 gelagert. Die untere Walze 28 der Nachzerkleinerungseinrichtung ist hingegen ortsfest gelagert. Durch Beaufschlagen des Hydraulikzylinders 38 kann die obere Walze 28 somit näher an die untere Walze 28 herangefahren werden. Der Kolben des Hydraulikzylinders 38 arbeitet gegen die Wirkung einer an der Schwinge 34 angelenkten Feder 36. Wird der Hydraulikzylinder 38 von der Quelle P getrennt, zieht die Feder 36 die Schwinge 34 und somit die obere Walze 28 nach oben, so dass sich der Abstand zwischen den Walzen 28 vergrößert. Die dabei aus dem Hydraulikzylinder 38 herausströmende Hydraulikflüssigkeit wird über das Ventil 40 dem Sumpf 42 zugeführt. Die obere Walze 28 ist an ihrer zweiten Stirnseite an einer zweiten Schwinge gelagert, die der in Figur 2 gezeigten entspricht. Die zweite Schwinge wird vorzugsweise durch einen an ihr angelenkten Hydraulikzylinder verschwenkt.

Um ein Ausweichen der Walzen 28 zu ermöglichen, falls ein Fremdkörper zwischen sie gelangen sollte, kann das Gehäuse des Hydraulikzylinders 38 über eine entsprechende Feder am Rahmen 12 abgestützt sein. Denkbar wäre auch, ihn hydraulisch abzufedern, d. h. den Kolbenflächendruckraum mit einem entsprechenden Druckspeicher zu verbinden.

Die Schwinge 34 ist außerdem mit einem Positionssensor 46 in Form eines von der Schwinge 34 verstellten Potentiometers verbunden, der ein Ausgangssignal bereitstellt, das eine Information über die jeweilige Position der Schwinge 34 enthält. Der Positionssensor 46 könnte auch innerhalb des Gehäuse des Hydraulikzylinders 38 angeordnet sein. Das Ausgangssignal des Positionssensors 46 wird der Steuereinrichtung 44 zugeführt. Es ermöglicht der Steuereinrichtung 44, das Ventil 40 derart anzusteuern, dass die obere Walze 28 in eine Sollposition verbracht wird. Die Steuereinrichtung 44 ist im Ergebnis zur Regelung der Position der oberen Walze 28 und somit der Größe des Spalts zwischen den Walzen 28 eingerichtet.

Die Steuereinrichtung 44 steuert die Größe des Spalts zwischen den Walzen 28, wie oben beschrieben, in Abhängigkeit von der mit dem Feuchtigkeitssensor gemessenen Feuchtigkeit des Ernteguts. Dazu ist in der Steuereinheit ein Zusammenhang zwischen der Feuchtigkeit und dem Abstand zwischen den Walzen 28 abgespeichert, beispielsweise in Form einer Tabelle, Datenbank oder als mathematische Funktion. In Sonderfällen kann die automatische Steuerung des Abstands zwischen den Walzen 28 durch einen Bediener in der Kabine ausgeschaltet und durch eine manuelle Einstellung der Größe des Spalts ersetzt werden.

Anzumerken ist, dass verschiedene Modifikationen der Erfindung denkbar sind. So wäre es denkbar, anstelle des Mikrowellensensors einen beliebigen anderen Feuchtigkeitssensor zu verwenden, z. B. einen kapazitiven Sensor, einen optischen Sensor oder einen Leitfähigkeitssensor. Der Feuchtigkeitssensor kann auch an einer Stelle der Erntemaschine 10 zwischen der Häckseltrommel 22 und dem Drehkranz des Austragsschachts 26 oder stromauf der Häckseltrommel 22 angeordnet sein.

Anstelle an einer verschwenkbaren Schwinge 34 kann die obere Walze 28 auch auf einem verschiebbaren Element angeordnet sein, wie in der DE 195 39 143 A beschrieben. Auch wäre denkbar, nicht die obere, sondern die untere Walze 28 (oder beide Walzen) zu bewegen.

Es wäre auch denkbar, eine andere hydraulische Ansteuerung der bewegbaren Walze 28 zu verwenden. So kann beispielsweise die in der DE 195 39 143 A, deren Lehre durch Verweis in die vorliegende Offenbarung mit aufgenommen wird, beschriebene Steuerung der Einzugswalzen, die einen wählbaren Druck ermöglicht, auf die Walzen 28 der Nachzerkleinerungseinrichtung übertragen werden. In diesem Fall würde nicht der Abstand der Walzen 28, sondern die Anpresskraft einer Walze 28 auf die jeweils andere Walze 28 durch die Steuereinrichtung 44 in Abhängigkeit von der Feuchtigkeit des Ernteguts geregelt bzw. eingestellt.

## Patentansprüche

1. Vorrichtung zur Einstellung des Abstandes und/oder der Anpresskraft zweier Walzen (28) einer Nachzerkleinerungseinrichtung, zwischen denen gehäckseltes Erntegut hindurchführbar ist, bei der ein Sensor einen Parameter des Ernteguts erfasst und die Größe des Abstands und/oder die Anpresskraft der Walzen (28) in Abhängigkeit von dem gemessenen Parameter selbsttätig durch eine mit dem Sensor verbundene Steuereinrichtung (44) regelbar ist, welche bei einer Regelung des Abstands zwischen den Walzen (28) mit einer Information über den jeweils aktuellen Abstand beaufschlagbar ist, **dadurch gekennzeichnet, dass** der Sensor ein Feuchtigkeitssensor ist, der die Feuchtigkeit des Ernteguts erfasst.

2. Vorrichtung nach Anspruch 1, **dadurch gekennzeichnet, dass** der Feuchtigkeitssensor ein Mikrowellensensor (28, 30) und/oder ein kapazitiver Sensor und/oder ein optischer Sensor und/oder ein Leitfähigkeitssensor ist.

3. Vorrichtung nach Anspruch 1 oder 2, **dadurch gekennzeichnet, dass** der Abstand zwischen den Walzen (28) bei relativ hoher Feuchte des Ernteguts kleiner ist als bei niedrigerer Feuchte.

4. Vorrichtung nach Anspruch 1 oder 2, **dadurch gekennzeichnet, dass** die Anpresskraft der Walzen (28) bei relativ hoher Feuchte des Ernteguts größer ist als bei niedrigerer Feuchte.

5. Vorrichtung nach einem der Ansprüche 1 bis 4, **dadurch gekennzeichnet, dass** die Anpresskraft und/oder die Größe des Abstands zwischen den Walzen (28) hydraulisch und/oder elektromotorisch und/oder pneumatisch eingestellt wird.

6. Nachzerkleinerungseinrichtung mit einer Vorrichtung nach einem der Ansprüche 1 bis 5.

7. Erntemaschine (10), insbesondere Feldhäcksler, mit einer Nachzerkleinerungseinrichtung nach Anspruch 6.

## Claims

1. Apparatus for setting the distance and/or the contact pressure between two rollers (28) of a secondary crusher between which chopped harvested crop can be fed through, in which a sensor registers a parameter of the harvested crop and the size of the distance and/or the contact pressure between the rollers (28) can be automatically adjusted as a function of the measured parameter by a control device (44) which is connected to the sensor and to which information on the respectively current distance can be imparted whenever the distance between the rollers (28) is adjusted, **characterized in that** the sensor is a moisture sensor which registers the moisture of the harvested crop.

2. Apparatus according to Claim 1, **characterized in that** the moisture sensor is a microwave sensor (28, 30) and/or a capacitive sensor and/or an optical sensor and/or a conductivity sensor.

3. Apparatus according to Claim 1 or 2, **characterized in that** the distance between the rollers (28) is smaller if the moisture of the harvested crop is relatively high, than if it is less so.

4. Apparatus according to Claim 1 or 2, **characterized in that** the contact pressure between the rollers (28) is greater if the moisture of the harvested crop is relatively high, than if it is less so.

5. Apparatus according to Claims 1 to 4, **characterized in that** the contact pressure and/or the size of the distance between the rollers (28) is set by hydraulic and/or electromotive and/or pneumatic means.

6. Secondary crusher having an apparatus according to one of Claims 1 to 5.

7. Harvesting machine (10), in particular a forage harvester, comprising a secondary crusher according to Claim 6.

## Revendications

1. Dispositif de réglage de la distance et/ou de la force de poussée entre deux cylindres (28) d'un dispositif de déchiquetage final entre lesquels un produit de récolte haché peut passer et dans lequel un détecteur détecte un paramètre du produit de récolte et la valeur de la distance et/ou de la force de poussée des cylindres (28) peut être régulée automatiquement en fonction du paramètre mesuré par un dispositif de commande (44) relié au détecteur, et qui lors de la régulation de la distance entre les cylindres (28), peut recevoir à tout instant une information sur la distance effective, **caractérisé en ce que** le détecteur est un détecteur d'humidité qui détecte l'humidité du produit de récolte.

2. Dispositif selon la revendication 1, **caractérisé en ce que** le détecteur d'humidité est un détecteur à micro-ondes (28, 30) et/ou un détecteur capacitif et/ou un détecteur optique et/ou un détecteur de conductivité.

3. Dispositif selon les revendications 1 ou 2, **caractérisé en ce que** la distance entre les cylindres (28) est plus petite lorsque l'humidité du produit de récolte est relativement élevée que lorsque l'humidité en est plus basse.

4. Dispositif selon les revendications 1 ou 2, **caractérisé en ce que** la force de poussée des cylindres (28) est plus grande lorsque l'humidité du produit récolté est relativement élevée que lorsqu'elle est plus basse.

5. Dispositif selon l'une des revendications 1 à 4, **caractérisé en ce que** la force de poussée et/ou la valeur de la distance entre les cylindres (28) est réglée hydrauliquement et/ou par moteur électrique et/ou pneumatiquement.

6. Dispositif de déchiquetage final doté d'un dispositif selon l'une des revendications 1 à 5.

7. Machine de récolte (10) et en particulier moissonneuse-hacheuse dotée d'un dispositif de déchiquetage final selon la revendication 6.
